# FASCICULE DE BREVET EUROPEEN

(11) **EP 1 803 327 B1**
(45) Date de publication et mention de la délivrance du brevet: **19.12.2018**
(21) Numéro de dépôt: 05810807.7
(22) Date de dépôt: 12.10.2005
(51) Int. Cl.: H05B 3/84

(54) **VITRAGE TRANSPARENT AVEC UN REVETEMENT CHAUFFANT RESISTIF**
MIT EINER WIDERSTANDS-HEIZBESCHICHTUNG AUSGESTATTETE TRANSPARENTE FENSTERSCHEIBE
TRANSPARENT WINDOW PANE PROVIDED WITH A RESISTIVE HEATING COATING

(30) Priorité: 15.10.2004 DE 102004050158
(43) Date de publication de la demande: 04.07.2007
(73) Titulaire: SAINT-GOBAIN GLASS FRANCE, 92400 Courbevoie (FR)
(72) Inventeur: SCHMIDT, Lothar, 52074 AACHEN (DE); BAUBET, Carole, 52064 AACHEN (DE); MAURER, Marc, 60200 COMPIEGNE (FR)
(74) Mandataire: Saint-Gobain Recherche
(86) Numéro de dépôt international: PCT/FR2005/050843
(87) Numéro de publication internationale: WO 2006/040498

(56) Documents cités:
- DE-A- 2 936 398

## Description

L'invention concerne un vitrage transparent avec un revêtement chauffant résistif présentant les caractéristiques du préambule de la revendication 1.

L'invention se rapporte plus particulièrement à un vitrage dont le revêtement chauffant résistif est un revêtement disposé sur un substrat et présentant des capacités d'isolation thermique et/ou de protection solaire. Les vitrages intégrant ce type de revêtement, lorsqu'ils sont destinés à équiper les véhicules, en permettent notamment de diminuer l'effort de climatisation et/ou de réduire une surchauffe excessive (vitrages dits « de contrôle solaire ») et/ou diminuer la quantité d'énergie dissipée vers l'extérieur (vitrages dits « bas émissifs ») entraînés par l'importance toujours croissante des surfaces vitrées dans les habitacles de véhicules.

Un type d'empilement de couches connu pour conférer aux substrats de telles propriétés est constitué d'au moins deux couches métalliques, comme une couche à base d'argent, qui se trouve disposée chacune entre deux revêtements en matériau diélectrique. Cet empilement est généralement obtenu par une succession de dépôts effectués par une technique utilisant le vide comme la pulvérisation cathodique éventuellement assistée par champ magnétique. Peuvent aussi être prévues deux couches métalliques très fines appelées « couches de blocage », disposées sous, sur ou de chaque côté de chaque couche d'argent, la couche sous-jacente en tant que couche d'accrochage, de nucléation et/ou de protection lors d'un éventuel traitement thermique postérieurement au dépôt, et la surcouche en tant que couche de protection ou « sacrificielle » afin d'éviter l'altération de l'argent si la couche d'oxyde qui la surmonte est déposée par pulvérisation cathodique en présence d'oxygène et/ou si l'empilement subit postérieurement au dépôt un traitement thermique.

Pour les pare-brise de véhicule en particulier, il existe sur le marché une forte demande de modèles chauffants, dans lesquels le chauffage doit par nature être aussi peu apparent ou gênant pour la vue que possible. Par conséquent, on demande de plus en plus un revêtement chauffant transparent pour les vitrages.

Un problème général des revêtements chauffants à faible absorption de lumière est leur résistance de surface relativement élevée, qui nécessite une haute tension d'alimentation, en tous cas pour des vitrages chauffants de grandes dimensions ou pour de longs chemins de courant, tension qui est en tout cas plus élevée que les tensions de bord usuelles dans les véhicules. Si l'on veut abaisser la résistance de surface, ceci s'accompagne, avec les systèmes de couches connus jusqu'à présent, d'une diminution de la transmission de la lumière visible, parce que les couches conductrices doivent être plus épaisses.

Pour ces raisons techniques, on monte encore à l'heure actuelle de préférence des vitrages chauffés par des fils, qui peuvent être alimentés sans problème par la tension de bord. Ces vitrages feuilletés avec des champs de chauffage intégrés en fils très fins ne sont cependant pas acceptés par tous les acheteurs.

Le brevet DE 1 256 812 B1 décrit une vitre en verre qui est chauffable à l'aide d'un revêtement en métal ou en oxyde de métal déposé de manière continue sur l'une de ses surfaces. Cette publication s'occupe de résoudre des problèmes apportés par la haute résistance ohmique dudit revêtement, qui est de l'ordre de 200 Ω/carré. Afin de pouvoir quand même réchauffer ce revêtement par une tension relativement basse à partir de deux barres conductrices latérales, on a prévu des électrodes étroites imprimées et à basse résistance ohmique (« électrodes auxiliaires »), qui s'étendent à partir desdites barres sur le champ de chauffage. Lesdites électrodes auxiliaires ne se terminent qu'à une distance courte avant la barre conductrice opposée, et elles se chevauchent avec une polarité alternée.

Lesdites lignes, optiquement apercevables comme une hachure, gênent cependant la vision et l'aspect optique du champ de vision principal de la vitre ainsi réalisée. Il n'est pas possible de profiter de l'avantage optique d'un revêtement chauffant transparent. C'est pourquoi cette vitre n'est prévue qu'en tant que lunette arrière pour des automobiles.

Un autre problème avec les revêtements chauffants peut apparaître du fait qu'ils ne peuvent parfois pas être déposés de façon homogène sur toute la surface du vitrage transparent, mais que l'on doit prévoir dans ceux-ci une ou plusieurs interruptions, dites "fenêtres de communication", qui perturbent l'écoulement du courant de chauffage et donnent lieu le cas échéant à la formation de "points chauds" (surchauffes locales) sur les bords de cette ou de ces fenêtres. De telles fenêtres de communication servent à rendre le revêtement, par nature réfléchissant pour les rayonnements d'ondes courtes, respectivement infrarouges, localement plus perméable à certains flux ou signaux d'informations.

Pour introduire et évacuer le courant de chauffage dans ces revêtements, il est prévu au moins une paire d'électrodes (en forme de bandes) ou de barres conductrices (aussi appelées des "bus-barres"), qui doivent introduire le courant dans le revêtement chauffant et le répartir sur un front large aussi uniformément que possible. Dans des vitrages de véhicule, qui sont nettement plus larges que hauts, les barres conductrices se trouvent la plupart du temps le long des plus longues arêtes du vitrage (en position montée, les arêtes supérieure et inférieure), de sorte que le courant de chauffage peut parcourir le chemin le plus court sur la hauteur du vitrage. En même temps, les fenêtres de communication précitées sont la plupart du temps situées à l'arête supérieure du vitrage et s'y étendent sur plusieurs centimètres de largeur.

Le document WO 00/72 635 A1 décrit un substrat transparent avec un revêtement réfléchissant les IR et une fenêtre de communication produite localement par l'enlèvement ou l'omission du revêtement.

Manifestement, chaque fenêtre de communication modifiant l'homogénéité du revêtement provoque une perturbation du flux de courant. Il apparaît des pointes de température locales ("points chauds"), qui peuvent conduire à des dommages au substrat (contraintes thermiques) et au revêtement lui-même. Cela n'est pas seulement le cas lorsque le revêtement est défectueux sur une grande surface, mais aussi lorsque la fenêtre de communication est formée par un nombre plus ou moins grand de fentes qui ne communiquent pas entre elles. Celles-ci entraînent également dans la partie de surface concernée une augmentation sensible de la résistance de couche et donnent également naissance aux points chauds mentionnés plus haut.

Le document mentionné en dernier lieu propose, comme mesure pour réduire l'effet gênant de la fenêtre de communication de grande étendue, de prévoir à son bord une bande électriquement conductrice, qui présente une résistance ohmique par unité carrée significativement inférieure à celle de la couche chauffante. Elle est censée conduire le courant autour de la découpe. De préférence, une fenêtre de communication est encadrée entièrement par une telle bande. La bande peut être produite par impression et cuisson d'une pâte de sérigraphie conductrice, contenant de l'argent. Elle peut cependant aussi être appliquée par le dépôt d'une laque électriquement conductrice ou par la pose d'un ruban métallique. Dans tous les cas, une liaison électrique conductrice de la bande avec le revêtement est naturellement nécessaire pour le fonctionnement.

La bande peut être masquée à la vue par superposition d'un ruban de masquage opaque, électriquement non conducteur, par exemple en émail noir. De tels rubans de masquage se composent en règle générale d'une matière à cuire non conductrice, de teinte noire (pâte de sérigraphie). Le rayonnement infrarouge n'est pas réfléchi, mais absorbé, par cette matière.

Par le document WO 03/024 155 A2, on connaît un vitrage transparent de ce type avec un revêtement chauffant, dans laquelle on indique d'une part une tension nominale maximale de 42 V, qui cherche cependant aussi à résoudre le problème des "points chauds" sur les bords d'une fenêtre de communication. En général, on utilise différents niveaux de tension, une tension plus basse étant appliquée à des chemins de courant raccourcis (par exemple à cause de la fenêtre de communication) afin d'éviter des surchauffes locales. Spécifiquement la région de la fenêtre de communication est découpée hors de la surface chauffante, en posant une barre conductrice séparée entre la fenêtre de communication et la barre conductrice située à l'opposé.

On connaît en outre par le document DE 36 44 297 A1 une multitude d'exemples pour diviser des revêtements chauffants d'un pare-brise de véhicule. Les divisions peuvent ainsi être réalisées par des parties non pourvues de couches de surface et/ou par des entailles produites mécaniquement ou par un faisceau laser. Elles servent au réglage approprié et à la déviation d'un flux de courant à l'intérieur de la surface revêtue et doivent garantir une densité de courant aussi uniforme que possible dans les surfaces concernées.

Par le document WO 2004/032569 A2, on connaît une autre configuration d'un vitrage transparent avec un revêtement chauffant, qui cherche également à atteindre une homogénéisation de la puissance de chauffage dans la surface par des lignes de séparation tracées dans le revêtement.

Le document DE 29 36 398 A1 porte sur des mesures destinées à empêcher des pointes de courant dans la transition entre les barres conductrices et le revêtement, dans un vitrage transparent avec un revêtement chauffant. D'une manière générale, on cherche à réduire la brusque différence de résistance entre le revêtement et les barres conductrices en utilisant des matières ou des formes à plus haute résistance pour les dernières, ou aussi avec des résistances intermédiaires. Pour le revêtement, on indique ici des résistances de surface comprises entre 1 et 10 ohms par unité de surface. Dans une des multiples variantes décrites ici, l'arête de chaque barre conductrice tournée vers la barre conductrice opposée est de forme ondulée. La formation de pointes orientées vers le revêtement chauffant doit ainsi être évitée. Par cette approche, on vise un allongement sensible de la ligne de transition entre la barre conductrice et le revêtement et dès lors une diminution de la densité de courant dans cette transition. Toutes ces mesures paraissent cependant peu aptes à pouvoir alimenter la couche chauffante avec une tension relativement basse.

Il est également connu de prévoir, sur la face d'incidence de cellules solaires photovoltaïques, des électrodes dites en grille ou en peigne (voir par exemple le document WO 03/075 351 A1). Elles sont souvent réalisées par sérigraphie et se composent d'une barre conductrice disposée au bord de la cellule solaire et d'une pluralité de très petites dents de peigne, qui s'étendent à partir de la barre conductrice sur la surface de la cellule solaire. Elles permettent une prise superficielle de la tension photovoltaïque, qui est présente sur les deux faces de l'absorbeur respectivement entre l'électrode en peigne antérieure et l'électrode postérieure métallique sur toute sa surface, sans réduire trop fortement la pénétration de la lumière dans l'absorbeur.

Le document DE 197 02 448 A1 divulgue un miroir chauffant, sur le substrat en verre duquel sont disposées deux voies conductrices ou électrodes en forme de peignes et indentées l'une dans l'autre, avec un revêtement de PTC (ayant un coefficient de résistance de température positif) qui les recouvre et qui comble les espaces intermédiaires entre les dents de peigne. Ici, il ne se pose pourtant pas le problème de rendre le chauffage invisible à l'oeil, parce que les voies conductrices et la couche chauffante peuvent se trouver derrière la couche de miroir.

Le document DE 198 32 228 A1 décrit un vitrage de véhicule avec un revêtement électriquement conducteur optiquement transparent et utilisé comme antenne. A partir de la couche d'antenne, on prélève des signaux radio à haute fréquence purement capacitifs à l'aide d'une électrode de couplage, qui se compose de plusieurs fins fils reliés les uns aux autres, qui sont disposés parallèlement l'un à l'autre à une distance élevée par comparaison avec leur diamètre, qui s'étendent à partir du bord dans le champ de vision du vitrage et qui s'y terminent sans suite. Il n'y a aucun couplage galvanique entre le revêtement et ces fils, parce qu'ils sont chaque fois disposés dans des plans différents du vitrage feuilleté.

Les barres conductrices déjà mentionnées à de multiples reprises peuvent être produites sur la vitre aussi bien par impression (sérigraphie) avant ou après le dépôt du revêtement, ou par brasage de minces rubans de bande de métal, de préférence en cuivre (étamé). Il existe aussi des combinaisons de barres conductrices imprimées et en bande métallique (voir par exemple le document DE 198 29 151 C1). Les barres conductrices sont certes le plus souvent étroites et en forme de bandes, elles ne sont cependant pas transparentes. Pour des raisons optiques, elles sont dès lors chaque fois disposées à proximité du bord extérieur des vitrages transparents concernés. La plupart du temps, elles peuvent être masquées par des revêtements de bord opaques (la plupart du temps produits par sérigraphie). De même, les fenêtres de communication précitées peuvent être masquées par ces revêtements de bord, dans la mesure où ces derniers sont suffisamment perméables au rayonnement à transmettre par la fenêtre de communication.

Dans les pare-brise de véhicule courants, ces revêtements opaques ont la forme d'un cadre prévu tout autour du vitrage, qui a en outre la fonction de protéger contre les rayons UV la jonction collée entre le vitrage et la carrosserie. Ces cadres entourent le champ de vision général des vitrages. Dans les pare-brise, on distingue en plus encore un champ de vision principal A, sensiblement au milieu de la surface du vitrage, dans lequel il ne peut y avoir aucune altération perceptible de la vision (par exemple des colorations, ou des fils ou d'autres dommages de taille supérieure à 30 microns), et le champ de vision secondaire B plus proche des bords.

Le problème à la base de l'invention consiste dès lors à procurer un vitrage transparent muni d'un revêtement chauffant, qui peut fonctionner avec des tensions nominales relativement basses, en particulier de l'ordre de 12 à 14 Volts, et qui produit néanmoins une distribution homogène du chauffage, en particulier sans point chaud, avec une vision la moins gênée possible dans le champ de vision général du vitrage et en particulier dans un champ de vision principal A du vitrage.

Ce problème est résolu selon l'invention par les caractéristiques de la revendication 1. Les caractéristiques des revendications dépendantes présentent des formes de réalisation préférées de cette invention.

Selon l'invention, le champ de chauffage formé par le courant circulant entre les barres conductrices lors de l'application d'une tension d'alimentation électrique entre ces barres, comporte au moins une zone semi-résistive en contact direct avec au moins une barre conductrice.

Par « conducteur » au sens de la présente invention, il faut comprendre que l'élément ainsi qualifié présente certes une résistance électrique car il n'est pas question ici d'utiliser des supraconducteurs, mais que cette résistance est très faible de telle sorte que lorsqu'il est traversé par le courant électrique utilisé, cet élément ne chauffe pas d'une manière perceptible par touché à la main dans la minute qui suit la mise sous tension, c'est-à-dire que cet élément sera classé comme constituant une zone froide lorsque le vitrage est observé par thermographie.

Par « résistif » au sens de la présente invention, il faut comprendre que l'élément ainsi qualifié présente une résistance électrique globale élevée de telle sorte que lorsqu'il est traversé par le courant électrique utilisé, cet élément chauffe d'une manière perceptible par touché à la main dans la minute qui suit la mise sous tension, c'est-à-dire que cet élément sera classé comme constituant une zone chaude lorsque le vitrage est observé par thermographie. Dans le domaine technique visé, les zones résistives présentent une résistance de surface de l'ordre de 0,5 à 5 ohms par unité de surface et les zones chaudes formées à leurs endroits présentent des densités de puissance au minimum de 400 à 450 Watts/m².

Par « semi-résistif » au sens de la présente invention, il faut comprendre que l'élément ainsi qualifié présente une résistance électrique globale faible qui est inférieure à celle de l' (ou des) élément(s) résistif (s), mais supérieure à celle de l' (ou des) élément (s) conducteur(s). L'expression « zone semi-résistive » utilisée en particulier ici désigne une surface présentant une résistance globale faible ; toutefois, la zone peut présenter en certains endroits une résistance élevée et en d'autres endroits une résistance très faible. Elle peut par exemple même comprendre des éléments conducteurs et des éléments résistifs dont la combinaison et configuration rend ladite zone « semi-résistive ».

Le champ de chauffage est la résultante directe du champ électrique lors de l'application de la tension aux bornes du champ électrique. Il désigne également la zone proprement dite de chauffage dudit vitrage, qui s'étend entre les deux barres conductrices.

La présente invention a pour effet de créer un champ de chauffage nouveau du fait de l'utilisation d'un champ électrique particulier : comme dans les champs électrique de l'art antérieur, les extrémités du champ électrique sont formées par des zones conductrices matérialisées par les barres conductrices ou « bus-barres » et entre ces barres un champ électrique est réalisé ; toutefois, à la différence de l'art antérieur, la résistance de surface de ce champ n'est pas homogène sur toute sa surface : au contact d'au moins une barre conductrice une zone semi-conductrice est réalisée, ce qui a pour effet de favoriser la conduction électrique dans cette zone traversée par le courant et a pour effet de réaliser en quelque sorte un transport favorisé d'énergie vers la zone résistive suivante.

Au moins une partie du champ électrique selon l'invention présente ainsi le schéma suivant d'une barre conductrice à l'autre :
Zone conductrice/zone semi-conductrice/zone résistive/ ... / zone conductrice.

En effet, sur au moins un parcours entre deux barres conductrices, le courant va d'abord passer par une zone semi-conductrice, puis par une zone résistive.

Le champ électrique entre les barres conductrices présente ainsi un gradient de résistivité constitué d'au moins deux états distincts (semi-résistif / résistif) ; il peut aussi s'agir d'un gradient progressif constitué d'une multitude d'états, passant ainsi progressivement de l'état conducteur à l'état résistif pour revenir à l'état conducteur.

Tout cela peut être observé par thermographie.

La présente invention présente un intérêt tout particulier pour la technologie dite « des pare-brise panoramiques ».

Selon cette technologie, on cherche à réaliser des pare-brise le plus large et/ou le plus haut possible, incluant des portions s'étendant latéralement sur les côtés du véhicule et/ou respectivement sur le toit du véhicule.

Grâce à l'invention, il est ainsi possible de réaliser des pare-brises panoramiques chauffants dont on concentre la puissance de chauffage dans la partie essentielle du vitrage, à savoir le champ de vision principal A.

Avec ces caractéristiques et ces mesures, on obtient un raccourcissement relatif du chemin du flux de courant à l'intérieur du revêtement à relativement haute résistance lui-même, parce qu'une partie de la distance entre les barres conductrices proprement dits et le champ de chauffage central principal dans le champ de vision principal A, est franchi par des conducteurs auxiliaires à faible résistance, ou bien par lesdites zones semi-résistives.

Le champ de vision principal A du vitrage ne comporte de préférence pas de zone semi-résistive et reste ainsi optiquement libre de toutes perturbations ou obstructions.

Dans une variante, au moins une zone semi-résistive est, de préférence, en contact direct avec au moins une barre conductrice au potentiel positif.

Au moins une autre zone semi-résistive est alors, de préférence, en contact direct avec au moins une barre conductrice au potentiel négatif et le champ de vision principal A est alors, de préférence, situé entre lesdites deux zones semi-résistives au moins.

Dans une version particulière de l'invention, la zone semi-résistive comporte des brins conducteurs formés de lignes imprimées conductrices imprimées de préférence sur le revêtement chauffant 2 et/ou de fils conducteurs, ces fils conducteurs étant, de préférence, raccordés électriquement au revêtement chauffant et à ladite zone semi-résistive au moins par brasage au moins en des points de contact discrets.

Les brins conducteurs ne recouvrent qu'une partie (proche des bords du vitrage) du champ de chauffage, notamment une bande plus ou moins large le long des barres conductrices.

Ils se terminent en aveugle, de préférence avant la limite du champ de vision central A.

On utilise ainsi une zone semi-résistive qui ne gêne pas beaucoup la vision, ce que l'on cherche de toute façon avec toute zone semi-résistive dont on parle ici.

Au contraire du document DE 1 256 812 B1 il n'y a pas d'éléments chevauchants de polarité opposée dans le domaine du champ de vision principal et le courant découle - après activation de l'alimentation électrique - sensiblement dans une direction normale aux barres conductrices et donc dans une direction parallèle à la direction longitudinale globale des brins conducteurs terminant en aveugle. On comprendra sous cette « direction longitudinale globale » la direction ou l'extension générale dans laquelle s'étendent lesdits brins à partir des barres conductrices vers le champ de vision principal.

En outre, la résistance de transition entre la barre conductrice et le revêtement est encore réduite par une forte augmentation des surfaces de contact par comparaison avec l'art antérieur. Par conséquent, la tension nécessaire pour faire circuler les courants de chauffage sur la surface chauffante est plus basse.

Certes, cette configuration est utilisée de préférence pour des pare-brise, dans lesquels une bonne visibilité dans le champ de vision central suffit pour une conduite sûre, toutefois des vitrages chauffants selon l'invention peuvent également être montés en d'autres endroits du véhicule ainsi que dans d'autres machines et appareils mobiles et dans des bâtiments.

Alors que, dans les cellules solaires conventionnelles avec des électrodes en grille ou en peigne, la tension est présente sur l'épaisseur de la couche de l'absorbeur, une tension est appliquée, dans l'application selon l'invention, dans le but de faire circuler un courant dans le plan du revêtement. Les brins conducteurs et les zones semi-résistives selon l'invention ont ainsi pour effet de rapprocher électriquement l'une de l'autre les barres conductrices disposées comme d'habitude sur le bord du vitrage, sans toutefois dégrader sensiblement le champ de vision général du vitrage et sans dégrader du tout le champ de vision principal A.

Par ailleurs, force est de reconnaître que dans le document WO 00/72635 cité précédemment, le champ électrique, et par conséquent le champ de chauffage, ne comporte pas de zone semi-résistive car la bande qui entoure la fenêtre de communication est exclue du champ électrique du fait qu'une zone résistive est interposée entre la barre conductrice la plus proche et la fenêtre de communication qu'elle entoure. Le tracé des lignes de champ électrique sur la dernière figure de ce document montre que les lignes contournent la fenêtre de communication en restant dans le revêtement résistif, sans transiter par la bande qui entoure la fenêtre de communication.

Utilisée dans un véhicule, la configuration selon l'invention permet en particulier l'alimentation directe du chauffage du pare-brise avec la tension de bord usuelle de 12 à 14 V continus, pour laquelle se recommande naturellement un revêtement à résistance ohmique aussi faible que possible. L'extension des zones semi-résistives ou bien la longueur des brins est dimensionnée en fonction de la résistance de surface effective du revêtement choisi ; plus le revêtement lui-même est conducteur, plus les zones semi-résistives pourront être étroites ou plus les brins pourront être courts.

Mesurée à partir des barres conductrices, l'extension des zones semi-résistives ou bien la longueur des brins est plus grande que la largeur de la barre conductrice respective à laquelle ils sont rattachés et les brins s'étendant dans le champ de chauffage en contact avec le revêtement chauffant.

De même, avec cette configuration, on peut conserver tout le revêtement de la surface du vitrage transparent - abstraction faite de fenêtres de communication à prévoir éventuellement - de telle façon que ni des mesures de masquage ni des mesures d'enlèvement du revêtement ne soient nécessaires. Ainsi, les propriétés positives du revêtement, à savoir en particulier sa réflexion infrarouge (isolation thermique) et sa coloration homogène (couleur en réflexion et en transmission), sont préservées sur toute la surface.

Les brins conducteurs présentent une largeur et/ou une épaisseur de préférence inférieure ou égale à 0,5 mm, et de préférence encore inférieure ou égale à 0,3 mm, mesurée(s) en projection sur la surface du vitrage.

Les brins conducteurs, additionnels aussi minces que possible ne gênent qu'imperceptiblement la vue à travers le vitrage.

Etant donné que le vitrage transparent est dans presque tous les cas un vitrage feuilleté, dans lequel le revêtement lui-même est disposé sur une face située à l'intérieur du vitrage composite, les brins conducteurs pourraient aussi, en dehors de l'impression, être réalisés sous forme de fils fins, qui sont par exemple, de façon connue en soi, fixés sur un film adhésif composite et ensuite déposés avec ce film sur le revêtement, entrant ainsi en contact électrique avec le revêtement. Ce contact est stable à long terme après le collage définitif du vitrage feuilleté.

Dans la réalisation sous la forme de structures de sérigraphie, les brins conducteurs sont de préférence déposés sur un substrat avant l'application du revêtement (substrat en verre ou en matière plastique ou film plastique). Ceci peut se faire en une seule opération avec le dépôt des barres conductrices ou bus-barres proprement dites.

Il est en outre possible d'enjamber avec une faible résistance, avec des brins conducteurs, une ou plusieurs fenêtre(s) de communication réalisée(s) sur le bord du vitrage dans le revêtement, sans devoir craindre la formation de points chauds. Les courants dans les zones à problèmes connues sur les bords latéraux de telles fenêtres de communication sont très fortement réduits par les brins.

D'autres détails et avantages de l'objet de l'invention apparaîtront par les dessins d'un exemple de réalisation sous la forme d'un pare-brise de véhicule et par leur description détaillée qui suit.

Dans ces dessins schématiques, sans échelle particulière,
- La figure 1 illustre une forme de réalisation d'un vitrage transparent avec un revêtement chauffant résistif, dans laquelle des barres conductrices en forme de bandes sont raccordées à des brins de grille s'étendant en forme de doigts très fins dans la surface du vitrage,
- La figure 2 montre une deuxième forme de réalisation, dans laquelle le revêtement chauffant est divisé en chemins de courant à l'aide de lignes de séparation,
- La figure 3 montre une section transversale partielle à travers un vitrage conforme à l'invention le long de la ligne III-III dans la Fig. 1,
- La figure 4 représente un détail tiré de la Fig. 3,
- La figure 5 représente un détail similaire à celui de la figure 4 pour une autre forme de réalisation que celle de la figure 4 ;
- La figure 6 illustre une autre forme de réalisation d'un vitrage transparent avec un revêtement chauffant résistif, dans laquelle le revêtement chauffant comporte au moins une zone semi-résistive, et
- La figure 7 illustre une autre forme de réalisation d'un vitrage transparent avec un revêtement chauffant résistif, dans laquelle la couche adhésive présente une zone semi-résistive, la figure étant une section transversale partielle similaire à celle illustrée en figure 3, à travers un autre vitrage.

Selon les Figures, un revêtement 2 électriquement résistif et transparent sur toute la surface est situé de façon connue en soi dans un vitrage feuilleté chauffant 1 ayant un contour essentiellement trapézoïdal (curviligne). Le vitrage 1 n'est représenté ici que par une moitié ; son autre moitié est équivalente.

Le revêtement 2 est déposé d'une manière connue sur une face principale d'un substrat 11, ce substrat étant ensuite intégré au vitrage 1.

Une ligne interrompue désignée par 20 indique que le bord extérieur de la surface revêtue en continu est situé tout autour légèrement en retrait vers l'intérieur par rapport au bord extérieur périphérique du vitrage feuilleté 1, c'est-à-dire qu'une bande de bord est ménagée dans le revêtement autour de toute la surface. On obtient ainsi d'une part une isolation électrique vis-à-vis de l'extérieur, d'autre part une protection du revêtement contre des dommages de corrosion pénétrant par le bord extérieur du vitrage. Le retrait du bord extérieur 20 peut être produit par enlèvement du revêtement le long du bord du vitrage, par masquage du contour du substrat avant le dépôt du revêtement sur ce substrat ou aussi par traçage d'une ligne de séparation traversant le revêtement et courant le long du bord extérieur du substrat, qui peut suffire pour les objectifs d'isolation et de protection contre la corrosion.

Le revêtement 2 lui-même se compose de préférence et de façon connue en soi d'un système de couches de contrôle solaire à haute résistance thermique avec au moins une couche fonctionnelle métallique et de préférence au moins deux couches fonctionnelles métalliques, ce système supportant sans dommage les températures de plus de 650°C, nécessaires pour le cintrage des vitres de verre, c'est-à-dire sans dégradation de ses propriétés optiques, électriques et de réflexion de la chaleur. Le système de couches comprend encore, outre des couches métalliques (de préférence à base d'argent), d'autres couches comme des couches antireflet ainsi que, éventuellement, des couches barrière.

En relation avec la présente invention, on peut cependant encore utiliser d'autres systèmes de couches électriquement conducteurs à faible résistance à la température, et en particulier aussi des systèmes de couches, qui ne sont pas déposés directement sur une vitre rigide de verre, mais sur un film plastique (de préférence un film de PET). Tous ces systèmes de couches sont de préférence déposés par pulvérisation (pulvérisation cathodique par magnétron).

La résistivité de surface des systèmes de couches courants du type mentionné plus haut se situe entre environ 0,5 et 5 Ω/unité de surface. Les pare-brise de véhicule avec de tels systèmes de couches doivent atteindre au total une transmission de la lumière d'au moins 75% selon certaines normes, voire 70 % selon d'autres normes.

Par nature, la composition et la réalisation du revêtement sont ici d'une importance secondaire, de sorte qu'il n'y a pas lieu de s'y attarder en détail.

Sur le bord du vitrage feuilleté 1, une couche colorée opaque 3 en forme de cadre périphérique a été déposée, dont le bord intérieur 30 par rapport au bord extérieur du vitrage circonscrit le champ de vision général du vitrage transparent 1. Cette couche peut se trouver dans un autre plan du vitrage feuilleté que le revêtement 2 (située à l'intérieur ou à l'extérieur du vitrage composite). Elle sert de couche de protection contre le rayonnement UV pour un cordon de colle, avec lequel le vitrage terminé est collée dans une carrosserie de véhicule. Par ailleurs, elle peut masquer visuellement des éléments de raccordement pour la fonction électrique principale de chauffage et pour des fonctions électriques supplémentaires éventuelles du vitrage 1.

On voit ainsi le long du bord supérieur du vitrage feuilleté 1, dans la région de la surface recouverte par la couche colorée 3, une première barre conductrice 4 et le long du bord inférieur une deuxième barre conductrice 5. Les deux barres conductrices 4 et 5 sont en liaison électrique conductrice directe avec le revêtement 2, d'une façon connue en soi.

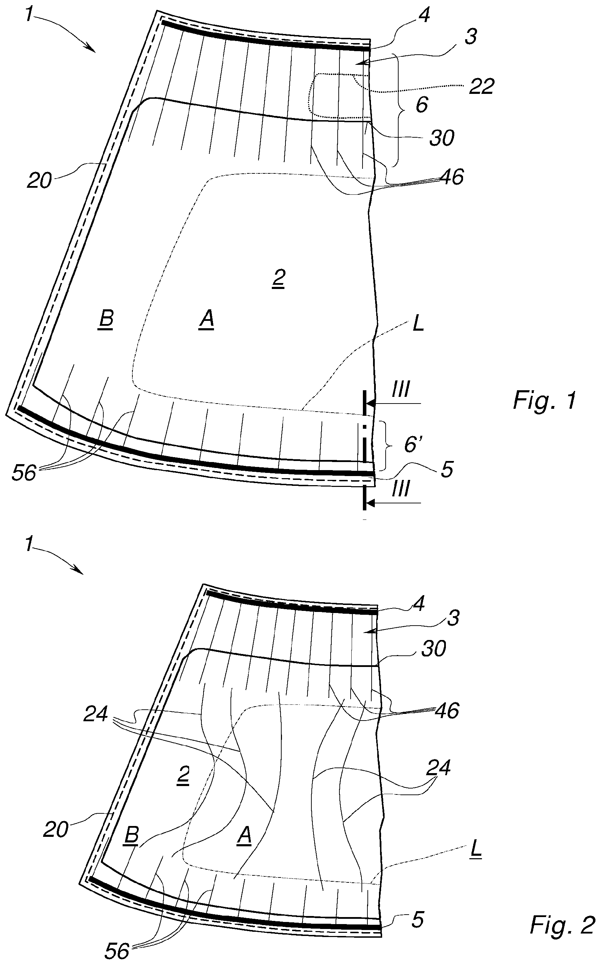

En dessous de la barre conductrice 4, on a encore indiqué sur les figures 1, 2 et 5, par moitié au milieu du vitrage une fenêtre de communication 22, qui est également recouverte par la couche colorée 3 et est dès lors masquée à la vue. Il est aussi possible de prévoir plusieurs fenêtres de communication.

De nombreux pare-brises de véhicule sont pourvus, le long de leur arête supérieure, d'une bande bleutée non représentée ici, mais transparente à la lumière ("filtre de bande"), qui diminue en particulier l'éblouissement par les rayons du soleil. De même, une telle bande peut aussi contribuer à masquer visuellement la fenêtre de communication. Elle peut aussi remplacer une partie de la largeur de la bande de la couche colorée 3 le long de l'arête supérieure du vitrage, ou être prévue en complément de celle-ci. Le chant de vision général du vitrage étant défini par le bord intérieur de la couche colorée, il peut par conséquent intégrer cette bande bleutée.

Le vitrage feuilleté 1 se compose en règle générale de deux vitres rigides en verre 11 et 12 et/ou en matière plastique, et d'une couche adhésive 13 assemblant celles-ci en surface. Les barres conductrices 4 et 5 sont posées sur la couche adhésive 13 (par exemple un film adhésif thermoplastique en polyvinyle butyral "PVB", en éthylène-vinyl-acétate "EVA" ou en polyuréthanne "PU"), et fixés à sa surface, avant que la couche adhésive soit assemblée et collée aux vitres rigides.

Les barres conductrices 4 et 5 peuvent se composer de rubans de film métallique minces et étroits (cuivre, aluminium), qui sont la plupart du temps fixés au préalable sur le film adhésif 13 et qui sont appliqués avec un contact électrique sur le revêtement 2 lors de l'assemblage des couches feuilletées. Le contact électrique peut cependant aussi être garanti par brasage des barres conductrices 4 et 5. Lors du processus ultérieur à l'autoclave, un contact sûr entre les barres conductrices et le revêtement est obtenu par l'action de la chaleur et de la pression.

Les barres conductrices 4 et 5 peuvent, comme on l'a indiqué plus haut, être réalisées en variante ou en complément par impression d'une pâte conductrice, qui est cuite lors du cintrage des vitrages. Ceci est aussi sensiblement moins coûteux que la pose de parties de rubans métalliques. Les barres conductrices imprimées ont dans tous les cas, lors de la fabrication continue, une résistance ohmique plus élevée que celle des rubans de film métallique. Le choix entre les barres conductrices en film métallique ou en bande sérigraphiée dépend dès lors uniquement du type de vitrage et éventuellement de la résistance globale du système de couches de chauffage.

Par comparaison avec le revêtement 2, les barres conductrices présentent toujours des résistances ohmiques négligeables et ne s'échauffent pas de façon notable lors du fonctionnement du chauffage.

L'application d'une tension entre les deux barres conductrices 4 et 5 dans le revêtement chauffant provoque la réalisation d'un champ électrique et par effet résistif, un champ de chauffage.

De façon connue en soi, on peut prévoir dans le vitrage feuilleté 1 deux (ou plus) champs de chauffage à alimenter séparément (avec division verticale par exemple au milieu du vitrage), qui doivent aussi naturellement être raccordés à leur source d'alimentation respective par des raccords conducteurs séparés. On peut dans ce cas utiliser un conducteur de masse commun pour les deux champs de chauffage, de telle façon que seul la barre conductrice 4 ou la barre conductrice 5 doit être divisé en deux parties, tandis que l'autre est continu. Dans la première variante, il faut quatre raccords extérieurs, alors que dans la deuxième il n'en faut que trois.

On ne reviendra pas en détail ici sur les raccords extérieurs, parce que ceux-ci ont déjà été décrits à de multiples reprises dans la technique.

A l'intérieur du champ de vision général circonscrit par le bord 30 de la couche colorée 3, on a indiqué schématiquement avec une ligne mixte L la limite extérieure du champ de vision principal A du pare-brise. La ligne L ne constitue pas une arête réelle ou analogue dans le vitrage ou dans le revêtement, mais elle sert seulement à illustrer visuellement la position approximative du champ de vision principal A. Ce dernier est décrit dans l'annexe 18 de la ECE R43 à l'aide de certains paramètres d'un environnement arbitraire de véhicule. Dans ce champ, aucune dégradation perceptible de la vision de taille supérieure à 30 microns n'est admise. A l'extérieur autour du champ de vision principal A s'étend le champ de vision secondaire B, dans lequel de petites limitations de la vision dues à des ajouts, etc., sont admises.

Selon l'invention, lors de l'application d'une tension d'alimentation électrique entre les barres conductrices 4 et 5, un courant circule en formant un champ de chauffage dans le revêtement, ce champ de chauffage comportant une zone semi-résistive 6 en contact direct avec la barre conductrice supérieure 4.

Grâce à la présente invention, le courant de chauffage va circuler entre les barres conductrices par le revêtement 2 dans un champ de chauffage présentant une zone à résistivité plus faible puis une zone à résistivité plus forte.

Toutefois, dans une version préférée de l'invention, le courant de chauffage va circuler entre les barres conductrices par le revêtement 2 dans un champ de chauffage présentant une zone à résistivité plus faible puis une zone à résistivité plus forte puis à nouveau une zone à résistivité plus faible.

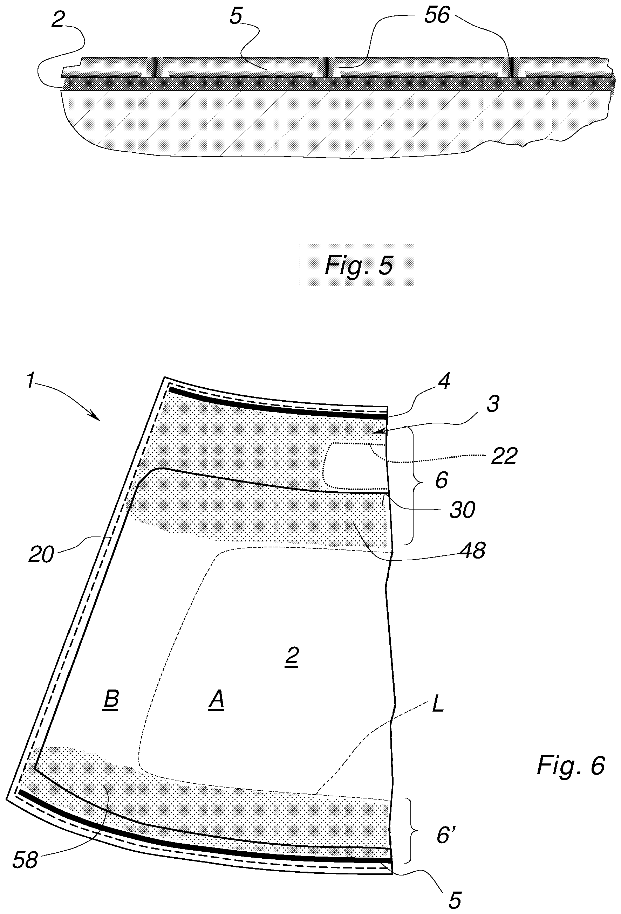

Comme illustré sur les figures 1 et 6 en particulier, une zone semi-résistive 6 supérieure s'étend ainsi vers le bas au-delà de la surface couverte par la couche colorée 3 dans le champ de vision général du vitrage en direction du champ de vision principal A et une zone semi-résistive 6' inférieure s'étend vers le haut au-delà de la surface couverte par la couche colorée 3 dans le champ de vision général du vitrage en direction du champ de vision principal A.

Dans une première version de l'invention, illustrée aux figures 1 à 5, partant de la barre conductrice supérieur 4, une zone semi-résistive 6 formée par un ensemble de lignes s'étend sous la couche colorée 3 puis dans le champ de vision général du vitrage feuilleté 1 à partir de la région de bord recouverte par la couche colorée 3, vers l'intérieur du champ de vision secondaire B.

Ces lignes se terminent en aveugle dans le champ de vision secondaire B, plus ou moins à proximité de la limite du champ de vision principal A. La longueur des lignes ainsi réalisées dépend directement de la conductivité du revêtement choisi.

Ces lignes représentent des brins conducteurs 46, qui sont raccordés électriquement à la barre conductrice 4 et au revêtement 2 et qui ont une résistance ohmique faible par comparaison avec ce dernier. Une pluralité de ces lignes enjambe en outre la fenêtre de communication 22, de telle façon qu'une alimentation électrique directe du revêtement 2 situé de part et d'autre de la fenêtre de communication, vu de la barre conductrice 4, soit garantie. Du point de vue visuel, ces lignes qui enjambent la fenêtre de communication 22 sont masquées par la couche colorée 3. Un autre masquage peut éventuellement, comme on l'a déjà indiqué, être assuré par une bande de couleur bleutée (filtre de bande) non représentée ici.

A partir de la barre conductrice inférieur 5 également, des brins conducteurs 56 similaires aux brins conducteurs 46 s'étendent dans le champ de vision B du vitrage feuilleté 1.

Dans chaque cas, la combinaison des brins conducteurs, respectivement 46 ou 56 forme avec le revêtement 2 une zone semi-résistive selon l'invention.

Il n'est pas obligatoire de prévoir de tels brins conducteurs 46 et 56 pour les deux barres conductrices respectivement 4 et 5. Dans le cas cependant où des brins conducteurs sont prévus des deux côtés du champ de vision principal A, ils ne s'étendent en aucun cas de telle manière que des brins conducteurs de polarité opposée chevauchent dans une projection perpendiculaire à leurs directions globales. Ainsi la partie centrale du champ de vision général et de chauffage et en particulier le champ de vision principal A, reste non perturbé.

Alors que, dans les vitrages conventionnels avec un chauffage en couche sans zone semi-résistive, le courant de chauffage ne doit circuler que par le revêtement sur toute la distance entre les barres conductrices, cette distance peut être réduite à des valeurs comprises entre 25 et 80% avec la (ou les) zone (s) semi-résistive (s) selon l'invention et en particulier avec les brins conducteurs selon la présente invention, selon l'étendue du champ de vision A, une partie du courant enjambant la distance restante dans la (ou les) zone (s) semi-résistive (s) et en particulier dans les brins conducteurs.

Sur les figures 1 et 2, les brins 64 et 65 sont disposés avec des distances uniformes les uns par rapport aux autres et sont tous réalisés avec la même longueur.

L'extrémité intérieure des brins conducteurs est sensiblement au même potentiel que les barres conductrices auxquelles ils sont reliés.

Dans le champ de vision général du vitrage, le courant circule sensiblement perpendiculairement aux barres conductrices 4 et 5 et parallèlement à l'extension globale longitudinale des brins conducteurs 46, 56.

Ainsi, le courant circule dans le champ de vision général dans une direction sensiblement parallèle à la direction longitudinale des brins conducteurs.

Comme auparavant, il subsiste un flux de courant, même s'il est réduit, sur toute la surface du revêtement, parce que les barres conductrices ne sont pas séparées du revêtement dans les parties situées entre les brins conducteurs. Ce flux de courant ne peut cependant pas conduire à la formation de points chauds sur les bords de la fenêtre de communication 22.

Pour les objectifs de la présente invention déjà mentionnés plus haut, les brins conducteurs 46 respectivement 56 doivent aussi avoir un contact galvanique intime avec le revêtement, en plus de leur bonne conductibilité (afin de former ainsi, comme mentionné plus haut, une zone semi-résisitive). Il est certes en principe imaginable de les réaliser sous forme de portions de fils. De préférence, ils sont cependant imprimés, avant le dépôt du revêtement, sur la surface du vitrage qui devra ultérieurement porter le revêtement. Il est certes également possible de les imprimer sur le revêtement terminé, mais ceci entraîne le risque d'endommager le revêtement à plusieurs couches, peu résistant mécaniquement.

De préférence, les brins conducteurs sont imprimés à partir d'une pâte de sérigraphie bien conductrice contenant au moins 80%, et de préférence plus de 85% d'argent.

Ces brins conducteurs présentent, de préférence, une coloration sombre vus par une face extérieure du vitrage, afin d'être difficilement perceptibles à l'oeil lorsque l'on regarde de l'extérieur vers l'intérieur du véhicule et, de préférence aussi, présentent une coloration claire, vus par une face intérieure du vitrage afin d'être difficilement perceptibles à l'oeil lorsque l'on regarde de l'intérieur vers l'extérieur du véhicule.

Si l'on utilise des barres conductrices 4 et 5 imprimées, ces derniers peuvent alors être produits en une seule opération en même temps que les brins conducteurs 46/56 et à partir de la même pâte de sérigraphie. Ensuite, plus aucune opération séparée n'est nécessaire pour la mise en contact électrique des brins conducteurs et des barres conductrices.

Si l'on utilise au contraire des barres conductrices en rubans de film métallique, ces dernières doivent alors être raccordées sous une faible résistance ohmique au revêtement et aux brins conducteurs. On va alors braser les rubans de film étamés de préférence avec les brins conducteurs, de façon connue en soi. En principe, les pâtes de sérigraphie à haute teneur en métal utilisées ici se brasent bien avec les rubans de métal étamés.

Les longueurs et les distances mutuelles des brins conducteurs 46 et 56, leur nombre ainsi que les dimensions des barres conductrices ne peuvent être représentées ici que de façon schématique. On peut voir cependant les dimensions relatives ; alors que les barres conductrices proprement dites 4 et 5 sont réalisées sous la forme de bande habituelle avec une largeur de quelques millimètres, les brins conducteurs 46 et 56 sont aussi étroits et aussi peu visibles que possible, nettement plus longs cependant que les largeurs des barres conductrices.

La configuration individuelle dans un vitrage feuilleté concret peut certes être prédéterminée dans les grandes lignes par simulation, elle dépend cependant toujours très largement de la grandeur respectivement des dimensions du vitrage concret, du type de barres conductrices et des propriétés électriques réelle du revêtement.

Il peut par exemple aussi suffire de combiner uniquement une des barres conductrices avec des brins conducteurs. Pour une distance relativement faible entre les deux barres conductrices 4 et 5, les brins conducteurs eux-mêmes peuvent aussi être raccourcis.

Dans le cas de lignes rectilignes pour un vitrage de véhicule, ces lignes ne sont pas parallèles mais convergent vers la barre conductrice à laquelle elles sont rattachées de préférence de telle manière qu'une symétrie longitudinale (selon l'axe longitudinal du véhicule) peut être observée sur le vitrage.

On a déterminé, pour un type concret de vitrage, des distances mutuelles de 25 mm entre les divers brins conducteurs comme étant utilisable. En faisant varier les distances, les puissances de chauffage de surface disponibles dans les zones semi-résistives pour une résistance prédéterminée des brins conducteurs peuvent cependant être ajustées si nécessaire. En outre, on n'a montré ici pour simplifier que des brins conducteurs rectilignes. Ceci n'exclut pas que l'on puisse dans la pratique les réaliser sous des formes courbes et/ou ondulées et/ou en boucles ouvertes ou fermées et/ou en portion d'arcs et/ou en méandres, qui pourraient être moins apparentes à la vue.

La Figure 2 montre une variante, dans laquelle le revêtement 2 est divisé par des lignes de séparation 24 dans le champ de vision général. Les lignes de séparation 24 peuvent traverser entièrement le revêtement jusqu'à la surface du substrat ou aussi ne pénétrer que jusqu'à la couche partielle conductrice proche du substrat. Elles doivent partager le revêtement par nature continu en chemins de courant. Il existe différentes technologies pour produire de telles lignes de séparation, parmi lesquelles le découpage au laser est actuellement la plus courante, parce que la plus économique au regard du résultat. En particulier, les lignes de séparation réalisables ainsi sont extrêmement étroites et ne sont que difficilement perceptibles à l'oeil nu.

Si l'on se représente la vue de la Figure 2 dans l'optique d'un conducteur de véhicule (dans un véhicule à conduite à gauche), il devra le plus souvent regarder à travers la partie de surface, dans laquelle les lignes de séparation 24 sont les plus rapprochées les unes des autres. Celles-ci ont pour but de rassembler le flux de courant à travers le revêtement 2 dans le champ de vision principal A précisément dans cette région, et ainsi de fournir la plus grande puissance de chauffage dans cette région principale de vision lorsque la vue est gênée par la neige, la glace ou des gouttes d'eau, et d'assurer le plus rapidement et le plus efficacement possible une vision claire.

Ici également, la disposition des lignes de séparation 24 n'est indiquée que de façon schématique et ne permet de tirer que peu de conclusions quant à des configurations réelles. Il n'est en outre pas toujours judicieux de tracer toujours des lignes de séparation continues, mais on peut imaginer de réaliser certaines ou toutes les lignes de séparation segmentées, pour ainsi dire pointillées, respectivement de prévoir, au lieu des lignes de séparation plus longues, quelques portions courtes pour dévier le courant dans des chemins prédéterminés. Ceci est cependant déjà connu aussi par le document DE 36 44 297 A1 cité plus haut.

Il est cependant évident, ici aussi, que le courant chauffant dans le champ de vision général circule sensiblement dans une direction globale perpendiculaire aux barres conductrices et parallèle aux axes longitudinaux des brins conducteurs 46 / 56.

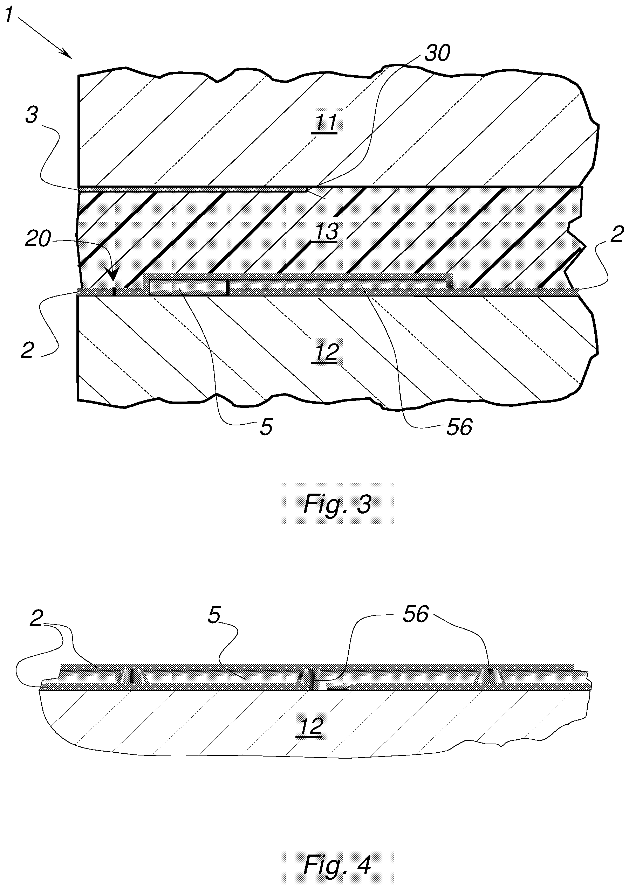

La Figure 3 montre une vue en coupe à travers le bord du vitrage 1 le long de la ligne III-III de la Fig. 1. On voit deux vitres individuelles rigides 11, 12 (en verre ou en matière plastique) ainsi qu'une couche adhésive 13 électriquement isolante, optiquement transparente et assemblant celles-ci l'une à l'autre par collage de la manière usuelle. Cette dernière est subdivisée horizontalement par des traits mixtes, pour indiquer qu'elle est en réalité nettement plus épaisse que le revêtement transparent 2 déposé sur la vitre inférieure 12. Celui-ci est ombré en gris ici, pour des raisons de visibilité. La couche adhésive peut être formée de la manière usuelle par un film de PVB d'une épaisseur d'environ 0,76 mm.

Les repères numériques des Figures 1 et 2 ont été conservés. Visiblement, le revêtement 2, dont la région de bord extérieure est séparée par les lignes de séparation 20, est situé sur la vitre 12 au-dessus de la barre conductrice 5 et des brins conducteurs 56 raccordés à celle-ci, qui ont été déposés ici avant le dépôt du revêtement 2 sous forme de structures de sérigraphie. La couche colorée opaque 3 est ici imprimée sur la face de la vitre 11 située à l'intérieur du vitrage composite et recouvre en projection verticale (direction de vision) la ligne de séparation 20, la barre conductrice 5, et les brins conducteurs dans leur partie se raccordant directement à la barre conductrice. Les brins conducteurs se prolongent cependant en plus au-delà du bord 30 de la couche colorée opaque 3 jusque dans le champ de vision général du vitrage 1.

La couche colorée opaque 3 pourrait aussi, à la différence de la représentation, être située sur les faces extérieures non visibles ici d'une des vitres 11 ou 12, ou aussi sur la même surface que le revêtement 2 et les barres conductrices 4 et 5.

La Figure 4 illustre la disposition des brins conducteurs par une autre coupe, dont la direction d'observation part de la droite dans la Figure 3 dans le plan de la surface de la vitre 12. On regarde donc vers les faces frontales des brins conducteurs 56, dans l'arrière-plan desquels la barre conductrice 5 s'étend transversalement à la direction d'observation.

Pour parfaire l'observation, dans la région du brin conducteur central de la figure 4, le revêtement 2 de la surface de la vitre 12 est enlevé sur une partie. On y observe plus précisément, qu'aussi bien la barre conductrice que le brin conducteur se trouvent en dessous du revêtement 2 sur la surface de la vitre 12.

Dans une autre forme de réalisation, illustrée figure 5, avec une barre conductrice fabriquée à partir de rubans de films métalliques, on appliquerait celui-ci sur le revêtement 2 et on l'assemblerait à celui-ci de façon aussi continue et à aussi faible résistance que possible par des assemblages brasés ; le cas échéant aussi par des colles conductrices (ce qui est également connu comme alternative). Les assemblages brasés doivent naturellement être prévus en particulier au niveau des brins conducteurs.

Dans une deuxième version de l'invention, illustrée à la figure 6, partant de la barre conductrice supérieur 4, une zone semi-résistive 6 formée par une zone particulière du revêtement chauffant 2 et illustrée par des lignes pointillées croisées, s'étend sous la couche colorée 3 puis dans le champ de vision général du vitrage feuilleté 1 à partir de la région de bord recouverte par la couche colorée 3, vers l'intérieur du champ de vision secondaire B. Dans cette zone semi-résistive 6, la résistance du revêtement chauffant 2 est inférieure à la résistance du revêtement chauffant en dehors de toute zone semi-résistive.

Dans cette zone semi-résistive 6 la résistance du revêtement chauffant 2 est deux fois, cinq fois, voire dix fois inférieure ou plus encore à la résistance du revêtement résistif en dehors de toute zone semi-résistive.

A partir de la barre conductrice inférieure 5, une zone semi-résistive 6' formée par une zone particulière du revêtement chauffant 2, similaire à la zone semi-résistive 6 et illustrée également par des lignes pointillées croisées, s'étend dans le champ de vision B du vitrage feuilleté 1.

Il n'est pas obligatoire de prévoir de telles zones semi-résistives du revêtement pour les deux barres conductrices respectivement 4 et 5. Dans le cas cependant où des zones semi-résistives du revêtement sont prévues des deux côtés du champ de vision principal A, elles ne s'étendent pas dans la partie centrale du champ de vision général et de chauffage et en particulier le champ de vision principal A reste non perturbé.

Cette deuxième version peut être obtenue industriellement en réalisant des dépôts de couches supplémentaires en zones semi-résistives soit lors du dépôt du revêtement chauffant lui-même par des variations transversales d'épaisseurs de couches sur les grandes plaques revêtues en continu du revêtement chauffant, soit après découpe des substrats revêtus du revêtement chauffant, par dépôt local supplémentaire sur ces substrats.

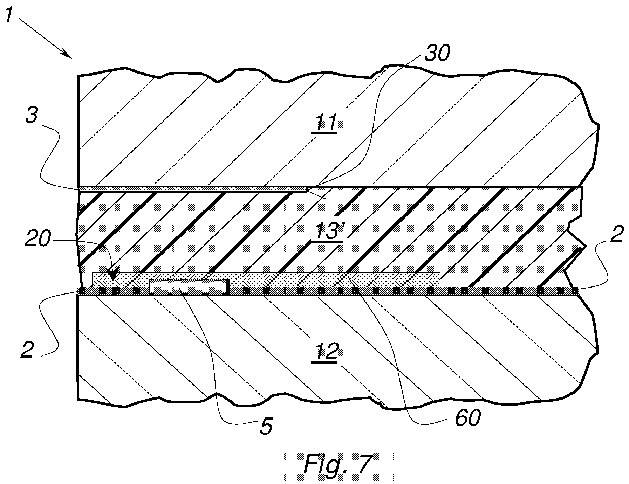

Dans une troisième version de l'invention, illustrée à la figure 7, le vitrage est un vitrage composite incluant au moins une couche adhésive 13' en contact électrique avec le revêtement chauffant 2. Cette couche adhésive 13' comporte au moins une zone semi-résistive illustrée ici par une bande de matière plastique semi-résistive 60. Cette bande est inclue dans la face de la couche adhésive qui sera au contact du revêtement chauffant 2 lors de la fabrication de la couche de manière à ce que lors de la fabrication du vitrage la bande de matière plastique 60 soit en contact avec la barre conductrice 5.

Cette troisième version est illustrée en partie basse du vitrage, mais elle peut bien sûr également ou à la place être mise en oeuvre en partie haute du vitrage.

Il est par ailleurs possible que la bande ou portion de matière plastique soit réalisée sur toute l'épaisseur de la couche adhésive 13' ou encore qu'elle soit matérialisée par une bande de matière plastique intégrant une grille conductrice sur sa surface en contact avec le revêtement chauffant.

On pourrait également considérer la combinaison de la bande de matière plastique 60 -éventuellement conductrice - avec le revêtement 2 comme zone semi-résistive, car dans chaque cas la partie du revêtement 2 couverte par ladite bande 60 conduit au moins une partie du courant chauffant.

Pour réaliser une telle bande semi-résistive ou bien conductrice de matière plastique 60 il est par exemple possible de doper une matière « matrice » du film thermoplastique utilisé (en PVB, EVA, Polyuréthanne) de particules conductrices, notamment en métal, d'une telle densité que la zone ou bien le volume concerné soit au moins semi-résistif ou même conducteur. Un tel dopage est possible sans en trop gêner la transmission de la lumière.

## Revendications

1. Vitrage transparent (1) muni d'un revêtement chauffant (2) résistif, qui s'étend sur une partie importante du vitrage, en particulier sur un champ de vision principal (A) et qui est raccordé électriquement à au moins deux barres conductrices (4, 5) de telle façon que, lors de l'application d'une tension d'alimentation électrique entre les barres conductrices, un courant circule en chauffant un champ de chauffage dans le revêtement, **caractérisé en ce que** ledit champ de chauffage comporte au moins une zone semi-résistive (6) en contact direct avec au moins une barre conductrice (4, 5) et qui présente une résistance électrique globale faible qui est inférieure à celle de l'élément résistif, mais supérieure à celle des éléments conducteurs.

2. Vitrage selon la revendication 1, **caractérisé en ce que** ledit champ de vision principal (A) ne comporte pas de zone semi-résistive.

3. Vitrage selon la revendication 1 ou 2, **caractérisé en ce qu'**au moins une zone semi-résistive (6) est en contact direct avec au moins une barre conductrice au potentiel positif.

4. Vitrage selon la revendication précédente, **caractérisé en ce qu'**au moins une zone semi-résistive est en contact direct avec au moins une barre conductrice au potentiel négatif.

5. Vitrage selon la revendication précédente, **caractérisé en ce que** le champ de vision principal (A) est situé entre lesdites deux zones semi-résistives au moins.

6. Vitrage selon l'une quelconque des revendications précédentes, **caractérisé en ce que** au moins une partie du bord périphérique du vitrage est masquée par une couche colorée opaque (3), en particulier dans la région des barres conductrices (4, 5), au moins une zone semi-résistive (6) s'étendant dans le champ de vision général du vitrage, au-delà de la surface couverte par la couche colorée.

7. Vitrage selon l'une quelconque des revendications précédentes, **caractérisé en ce que** la résistance du revêtement chauffant (2) dans une zone semi-résistive (6) au moins est inférieure à la résistance du revêtement chauffant en dehors de toute zone semi-résistive.

8. Vitrage selon la revendication précédente, **caractérisé en ce que** la résistance du revêtement chauffant (2) dans une zone semi-résistive (6) au moins est deux fois, cinq fois, voire dix fois inférieure ou plus encore à la résistance du revêtement résistif en dehors de toute zone semi-résistive.

9. Vitrage selon l'une quelconque des revendications précédentes, **caractérisé en ce que** le vitrage est un vitrage composite incluant au moins une couche adhésive (13') en contact électrique avec le revêtement chauffant (2), ladite couche adhésive (13') comportant au moins une zone semi-résistive (6).

10. Vitrage selon la revendication précédente, **caractérisé en ce que** ladite zone semi-résistive (6) de la couche adhésive (13') est réalisée par dopage de particules conductrices d'au moins une bande (60) de ladite couche adhésive (13').

11. Vitrage selon l'une quelconque des revendications précédentes, **caractérisé en ce qu'**une zone semi-résistive (6) comporte des brins conducteurs (46, 56) formés de lignes imprimées conductrices et/ou de fils conducteurs.

12. Vitrage selon la revendication précédente, **caractérisé en ce que** lesdits brins (46, 56) partent d'au moins une des barres conductrices (4, 5), la longueur desdits brins étant plus grande que la largeur de la barre conductrice respective et lesdits brins s'étendant dans le champ de chauffage en contact avec le revêtement chauffant.

13. Vitrage selon la revendication 11 ou 12, **caractérisé en ce que** les brins (46, 56) présentent une largeur et/ou une épaisseur inférieure ou égale à 0,5 mm, de préférence inférieure ou égale à 0,3 mm, mesurée(s) en projection sur la surface du vitrage.

14. Vitrage selon l'une quelconque des revendications 11 à 13, **caractérisé en ce que** les brins (46, 56) formés de lignes imprimées conductrices sont imprimés sur le revêtement chauffant (2).

15. Vitrage selon l'une quelconque des revendications 11 à 14, **caractérisé en ce que** les brins (46, 56) formés de fils conducteurs sont raccordés électriquement au revêtement chauffant et à ladite zone semi-résistive au moins par brasage au moins en des points de contact discrets.

16. Vitrage selon l'une quelconque des revendications 11 à 15, **caractérisé en ce que** le courant circule dans le champ de vision général dans une direction sensiblement parallèle à la direction longitudinale desdits brins conducteurs.

17. Vitrage selon l'une quelconque des revendications 11 à 16, **caractérisé en ce que** les brins (46, 56) présentent une coloration sombre, vus par une face extérieure du vitrage.

18. Vitrage selon l'une quelconque des revendications 11 à 17, **caractérisé en ce que** les brins (46, 56) présentent une coloration claire, vus par une face intérieure du vitrage.

19. Vitrage selon l'une quelconque des revendications 11 à 18, **caractérisé en ce que** les brins (46, 56) sont disposés avec des distances uniformes les uns par rapport aux autres.

20. Vitrage selon l'une quelconque des revendications 11 à 19, **caractérisé en ce que** les brins (46, 56) sont tous réalisés avec la même longueur.

21. Vitrage selon l'une quelconque des revendications 11 à 20, **caractérisé en ce que** les brins (46, 56) sont réalisés sous forme de lignes rectilignes, de boucles ouvertes ou fermées, de portion d'arcs et/ou de méandres.

22. Vitrage selon l'une quelconque des revendications précédentes, **caractérisé en ce que** le revêtement chauffant (2) est divisé par des lignes de séparation (24) dans le champ de vision général, qui partagent le revêtement chauffant (2) en chemins de courant.

23. Vitrage selon la revendication précédente, **caractérisé en ce que** lesdites lignes de séparation (24) rassemblent le courant dans le champ de vision principal A.

24. Vitrage selon l'une quelconque des revendications précédentes, **caractérisé en ce que** les barres conductrices (4, 5) sont réalisées par impression et/ou à partir de rubans métalliques.

25. Vitrage selon la revendication précédente, **caractérisé en ce que** les barres conductrices imprimées sont imprimées sur le revêtement chauffant(2).

26. Vitrage selon la revendication 24, **caractérisé en ce que** les barres conductrices (4, 5) réalisées à partir de rubans métalliques sont raccordées électriquement au revêtement chauffant (2) et à une zone semi-résistive (6) au moins par brasage au moins en des points de contact discrets.

27. Vitrage selon l'une quelconque des revendications précédentes, **caractérisé en ce qu'**une zone semi-résistive n'est disposée que sur une partie de l'étendue longitudinale d'une ou de chaque barre conductrice (4, 5).

28. Vitrage selon l'une quelconque des revendications précédentes sous la forme d'un pare-brise de véhicule, **caractérisé en ce que** la (ou les) zone(s) semi-résistive(s) (6) s'étend(ent) au maximum jusqu'à la limite du champ de vision B normalisé de ce pare-brise.

29. Vitrage selon l'une quelconque des revendications précédentes, **caractérisé en ce qu'**une bande colorée bleutée s'étend au moins le long de son bord supérieur, et masque au moins en partie au moins une zone semi-résistive (6) disposée à cet endroit.

## Patentansprüche

1. Transparente Scheibe (1) mit einer resistiv beheizbaren Beschichtung (2), die sich über einen wesentlichen Teil der Scheibe, insbesondere über ein Hauptsichtfeld (A), erstreckt und mit mindestens zwei Stromschienen (4, 5) derart elektrisch verbunden ist, dass beim Anlegen einer elektrischen Speisespannung zwischen den Stromschienen Strom fließt, indem er ein Heizfeld in der Beschichtung heizt, **dadurch gekennzeichnet, dass**das Heizfeld mindestens eine halbresistive Zone (6) in direktem Kontakt mit mindestens einer Stromschiene (4, 5) aufweist, und die einen allgemein schwachen elektrischen Widerstand aufweist, der niedriger als der des resistiven Elements aber höher als der der leitenden Elemente ist.

2. Scheibe nach Anspruch 1, **dadurch gekennzeichnet, dass** das Hauptsichtfeld (A) keine halbresistive Zone aufweist.

3. Scheibe nach Anspruch 1 oder 2, **dadurch gekennzeichnet, dass** mindestens eine halbresistive Zone (6) in direktem Kontakt mit mindestens einer Stromschiene mit positivem Potential ist.

4. Scheibe nach vorangehendem Anspruch, **dadurch gekennzeichnet, dass** mindestens eine halbresistive Zone in direktem Kontakt mit mindestens einer Stromschiene mit negativem Potential ist.

5. Scheibe nach vorangehendem Anspruch, **dadurch gekennzeichnet, dass** sich das Hauptsichtfeld (A) zwischen den mindestens zwei halbresistiven Zonen befindet.

6. Scheibe nach einem der vorangehenden Ansprüche, **dadurch gekennzeichnet, dass** mindestens ein Teil des Umfangsrands der Scheibe von einer opaken Farbschicht (3) bedeckt ist, insbesondere in der Region der Stromschienen (4, 5), wobei sich mindestens eine halbresistive Zone (6) über die von der Farbschicht bedeckte Fläche hinaus in das allgemeine Sichtfeld der Scheibe erstreckt.

7. Scheibe nach einem der vorangehenden Ansprüche, **dadurch gekennzeichnet, dass** der Widerstand der beheizbaren Beschichtung (2) in mindestens einer halbresistiven Zone (6) niedriger als der Widerstand der beheizbaren Beschichtung außerhalb jeder halbresistiven Zone ist.

8. Scheibe nach vorangehendem Anspruch, **dadurch gekennzeichnet, dass** der Widerstand der beheizbaren Beschichtung (2) in mindestens einer halbresistiven Zone (6) zwei Mal, fünf Mal, ja sogar zehn Mal oder noch viel niedriger als der Widerstand der resistiven Beschichtung außerhalb jeder halbresistiven Zone ist.

9. Scheibe nach einem der vorangehenden Ansprüche, **dadurch gekennzeichnet, dass** die Scheibe eine Verbundscheibe ist, welche mindestens eine Haftschicht (13') in elektrischem Kontakt mit der beheizbaren Beschichtung (2) einschließt, wobei die Haftschicht (13') mindestens eine halbresistive Zone (6) aufweist.

10. Scheibe nach vorangehendem Anspruch, **dadurch gekennzeichnet, dass** die halbresistive Zone (6) der Haftschicht (13') durch Dotieren von leitenden Partikeln mindestens eines Streifens (60) der Haftschicht (13') ausgeführt ist.

11. Scheibe nach einem der vorangehenden Ansprüche, **dadurch gekennzeichnet, dass** eine halbresistive Zone (6) Leiteradern (46, 56) aufweist, die von gedruckten Leiterlinien und/oder leitenden Drähten gebildet sind.

12. Scheibe nach vorangehendem Anspruch, **dadurch gekennzeichnet, dass** die Adern (46, 56) ab mindestens einer der Stromschienen (4, 5) beginnen, wobei die Länge der Adern größer als die Breite der jeweiligen Stromschiene ist und sich die Adern in das Heizfeld im Kontakt mit der beheizbaren Beschichtung erstrecken.

13. Scheibe nach Anspruch 11 oder 12, **dadurch gekennzeichnet, dass** die Adern (46, 56) eine Breite und/oder eine Dicke aufweisen, die kleiner als oder gleich 0,5 mm, vorzugsweise kleiner als oder gleich 0,3 mm, gemessen in Projektion auf die Fläche der Scheibe, ist.

14. Scheibe nach einem der Ansprüche 11 bis 13, **dadurch gekennzeichnet, dass** die von gedruckten Leiterlinien gebildeten Adern (46, 56) auf die beheizbare Beschichtung (2) gedruckt sind.

15. Scheibe nach einem der Ansprüche 11 bis 14, **dadurch gekennzeichnet, dass** die von den leitenden Drähten gebildeten Adern (46, 56) mit der beheizbaren Beschichtung und mit der halbresistiven Zone mindestens durch Löten mindestens an diskreten Kontaktpunkten verbunden sind.

16. Scheibe nach einem der Ansprüche 11 bis 15, **dadurch gekennzeichnet, dass** der Strom in dem allgemeinen Sichtfeld in einer Richtung fließt, die etwa parallel zur Längsrichtung der Leiteradern ist.

17. Scheibe nach einem der Ansprüche 11 bis 16, **dadurch gekennzeichnet, dass** die Adern (46, 56), gesehen durch eine Außenfläche der Scheibe, eine dunkle Färbung aufweisen.

18. Scheibe nach einem der Ansprüche 11 bis 17, **dadurch gekennzeichnet, dass** die Adern (46, 56), gesehen durch eine Innenfläche der Scheibe, eine helle Färbung aufweisen.

19. Scheibe nach einem der Ansprüche 11 bis 18, **dadurch gekennzeichnet, dass** die Adern (46, 56) mit gleichmäßigen Abständen zueinander angeordnet sind.

20. Scheibe nach einem der Ansprüche 11 bis 19, **dadurch gekennzeichnet, dass** die Adern (46, 56) alle mit derselben Länge ausgeführt sind.

21. Scheibe nach einem der Ansprüche 11 bis 20, **dadurch gekennzeichnet, dass** die Adern (46, 56) in Form geradliniger Linien, offener oder geschlossener Schleifen, Bogen- und/oder Mäanderabschnitten ausgeführt sind.

22. Scheibe nach einem der vorangehenden Ansprüche, **dadurch gekennzeichnet, dass** die beheizbare Beschichtung (2) durch Trennlinien (24) in dem allgemeinen Sichtfeld geteilt ist, die die beheizbare Beschichtung (2) in Stromwege teilen.

23. Scheibe nach vorangehendem Anspruch, **dadurch gekennzeichnet, dass** die Trennlinien (24) den Strom im Hauptsichtfeld A zusammenführen.

24. Scheibe nach einem der vorangehenden Ansprüche, **dadurch gekennzeichnet, dass** die Stromschienen (4, 5) durch Drucken und/oder auf der Basis von Metallbändern ausgeführt sind.

25. Scheibe nach vorangehendem Anspruch, **dadurch gekennzeichnet, dass** die gedruckten Stromschienen auf die beheizbare Beschichtung (2) gedruckt sind.

26. Scheibe nach Anspruch 24, **dadurch gekennzeichnet, dass** die auf der Basis von Metallbändern ausgeführten Stromschienen (4, 5) mit der beheizbaren Beschichtung (2) und einer halbresistiven Zone (6) mindestens durch Löten mindestens an diskreten Kontaktpunkten elektrisch verbunden sind.

27. Scheibe nach einem der vorangehenden Ansprüche, **dadurch gekennzeichnet, dass** eine halbresistive Zone nur auf einem Teil der Längserstreckung einer oder jeder Stromschiene (4, 5) angeordnet ist.

28. Scheibe nach einem der vorangehenden Ansprüche in Form einer Windschutzscheibe eines Kraftfahrzeugs, **dadurch gekennzeichnet, dass** sich die resistive(n) Zone(n) (6) maximal bis zur Grenze des genormten Sichtfeldes B dieser Windschutzscheibe erstreckt/erstrecken.

29. Scheibe nach einem der vorangehenden Ansprüche, **dadurch gekennzeichnet, dass** sich mindestens entlang ihrem oberen Rand ein gebläuter Farbstreifen erstreckt und mindestens teilweise eine halbresistive Zone (6) bedeckt, die an dieser Stelle angeordnet ist.

## Claims

1. A transparent glazing unit (1) provided with a resistive heating coating (2) that extends over a substantial part of the glazing unit, in particular over a main viewing field (A), and is electrically connected to at least two busbars (4, 5) in such a way that, when an electrical supply voltage is applied between the busbars, a current flows, which heats a heating field in the coating, **characterized in that** said heating field includes at least one semiresistive region (6) in direct contact with at least one busbar (4, 5) and that has a low overall electrical resistance, which is less than that of the resistive element, but greater than that of the conducting elements.

2. The glazing unit as claimed in claim 1, **characterized in that** said main viewing field (A) does not include a semiresistive region.

3. The glazing unit as claimed in either of claims 1 and 2, **characterized in that** at least one semiresistive region (6) is in direct contact with at least one busbar at the positive potential.

4. The glazing unit as claimed in the preceding claim, **characterized in that** at least one semiresistive region is in direct contact with at least one busbar at the negative potential.

5. The glazing unit as claimed in the preceding claim, **characterized in that** the main viewing field (A) lies between said two at least semiresistive regions.

6. The glazing unit as claimed in any one of the preceding claims, **characterized in that** at least one part of the peripheral edge of the glazing unit is concealed by an opaque colored layer (3), in particular in the region of the busbars (4, 5), at least one semiresistive region (6) lying in the general viewing field of the glazing, beyond the area covered by the colored layer.

7. The glazing unit as claimed in any one of the preceding claims, **characterized in that** the resistance of the heating coating (2) in at least a semiresistive region (6) is less than the resistance of the heating coating outside any semiresistive region.

8. The glazing unit as claimed in the preceding claim, **characterized in that** the resistance of the heating coating (2) in at least a semiresistive region (6) is two times, five times or even ten times less, or even less, than the resistance of the resistive coating outside any semiresistive region.

9. The glazing unit as claimed in any one of the preceding claims, **characterized in that** it is a composite glazing unit that includes at least one adhesive layer (13') in electrical contact with the heating coating (2), said adhesive layer (13') having at least one semiresistive region (6).

10. The glazing unit as claimed in the preceding claim, **characterized in that** said semiresistive region (6) of the adhesive layer (13') is produced by doping at least one band (60) of said adhesive layer (13') with conducting particles.

11. The glazing unit as claimed in any one of the preceding claims, **characterized in that** a semiresistive region (6) comprises conducting strands (46, 56) formed from conducting printed lines and/or conducting wires.

12. The glazing unit as claimed in the preceding claim, **characterized in that** said strands (46, 56) start from at least one of the busbars (4, 5), the length of said strands being greater than the width of the respective busbar, and said strands extending into the heating field in contact with the heating coating.

13. The glazing unit as claimed in either of claims 11 and 12, **characterized in that** the strands (46, 56) have a width and/or a thickness of 0.5 mm or less, preferably 0.3 mm or less, measured in projection on the surface of the glazing unit.

14. The glazing unit as claimed in any one of claims 11 to 13, **characterized in that** the strands (46, 56) formed from conducting printed lines are printed on the heating coating (2).

15. The glazing unit as claimed in any one of claims 11 to 14, **characterized in that** the strands (46, 56) formed from conducting wires are electrically connected to the heating coating and at least to said semiresistive region by soldering at least at discrete contact points.

16. The glazing unit as claimed in any one of claims 11 to 15, **characterized in that** the current flows in the general viewing field in a direction approximately parallel to the longitudinal direction of said conducting strands.

17. The glazing unit as claimed in any one of claims 11 to 16, **characterized in that** the strands (46, 56) are dark in color when viewed via an external face of the glazing unit.

18. The glazing unit as claimed in any one of claims 11 to 17, **characterized in that** the strands (46, 56) are light in color when viewed via an internal face of the glazing unit.

19. The glazing unit as claimed in any one of claims 11 to 18, **characterized in that** the strands (46, 56) are placed uniformly apart.

20. The glazing unit as claimed in any one of claims 11 to 19, **characterized in that** the strands (46, 56) are all produced with the same length.

21. The glazing unit as claimed in any one of claims 11 to 20, **characterized in that** the strands (46, 56) are produced in the form of straight lines, open or closed loops, portions of arcs and/or meanders.

22. The glazing unit as claimed in any one of the preceding claims, **characterized in that** the heating coating (2) is divided by separating lines (24) in the general viewing field, which lines divide up the heating coating (2) into current paths.

23. The glazing unit as claimed in the preceding claim, **characterized in that** said separating lines (24) collect the current in the main viewing field A.

24. The glazing unit as claimed in any one of the preceding claims, **characterized in that** the busbars (4, 5) are produced by printing and/or from metal strips.

25. The glazing unit as claimed in the preceding claim, **characterized in that** the printed busbars are printed on the heating coating (2).

26. The glazing unit as claimed in claim 24, **characterized in that** the busbars (4, 5) produced from metal strips are electrically connected to the heating coating (2) and to at least a semiresistive region (6) by soldering at least at discrete contact points.

27. The glazing unit as claimed in any one of the preceding claims, **characterized in that** a semiresistive region is placed only over part of the longitudinal extent of one or each busbar (4, 5).

28. The glazing unit as claimed in any one of the preceding claims in the form of a vehicle windshield, **characterized in that** the semiresistive region or regions (6) extends or extend at most as far as the boundary of the normalized viewing field B of this windshield.

29. The glazing unit as claimed in any one of the preceding claims, **characterized in that** a bluish band extends at least along its upper edge and at least partly conceals at least one semiresistive region (6) positioned at this point.
